(19) Europäisches Patentamt
European Patent Office
Office européen des brevets

(11) Veröffentlichungsnummer: **0 115 830**
**B1**

(12) **EUROPÄISCHE PATENTSCHRIFT**

(45) Veröffentlichungstag der Patentschrift: **13.09.89**

(21) Anmeldenummer: **84100857.6**

(22) Anmeldetag: **27.01.84**

(51) Int. Cl.⁴: **B 32 B 17/10**, C 03 C 27/12, C 08 J 5/18, C 08 K 5/10, C 08 K 5/52, C 08 L 29/14

# (54) Thermoplastische Formmassen aus weichmacherhaltigem Polyvinylbutyral.

(30) Priorität: **31.01.83 DE 3303111**

(43) Veröffentlichungstag der Anmeldung: **15.08.84 Patentblatt 84/33**

(45) Bekanntmachung des Hinweises auf die Patenterteilung: **13.09.89 Patentblatt 89/37**

(84) Benannte Vertragsstaaten: **DE FR GB IT SE**

(56) Entgegenhaltungen:
**BE-A-674 701**
**DE-B-2 453 780**
**DE-B-2 732 717**
**FR-A-2 209 787**
**GB-A-796 899**
**GB-A-2 022 098**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Hermann, Hans Dieter, Dr., Am Dachsbau 7, D-6232 Bad Soden am Taunus (DE)**
Erfinder: **Fabian, Klaus, Drosselweg 11, D-6239 Kriftel (DE)**

**EP 0 115 830 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Erfindung betrifft thermoplastische Formmassen auf der Basis von weichmacherhaltigem Polyvinylbutyral, Verfahren zu ihrer Herstellung sowie ihre Verwendung zur Herstellung von thermoplastischen Formkörpern, insbesondere von hochfesten Folien, die sich hervorragend als verbindende Zwischenschicht bei der Herstellung von Verbundglas eignen.

Die Verwendung von weichgemachtem Polyvinylbutyral zur Herstellung von Verbundglas ist seit langem bekannt. Vorzugsweise haben sich dabei Polyvinylbutyrale mit einem Anteil an Vinylalkoholeinheiten zwischen ca. 17 und 23 Gew.-% bewährt. Als Weichmacher sind Tri- und Tetraethylenglykolester aliphatischer Monocarbonsäuren mit 5 - 10 Kohlenstoffatomen besonders geeignet. Sie verleihen den Formkörpern bzw. Folien eine gute Kältebeständigkeit und gute mechanische Eigenschaften.

Handelsübliche Polyvinylbutyralfolien enthalten beispielsweise 29 Gew.-% eines Triglykolesters aliphatischer Monocarbonsäuren und ein Polyvinylbutyral mit 20 - 21 Gew.-% Vinylalkoholeinheiten.

Durch Senken des Gehalts an Weichmacher lassen sich die mechanischen Eigenschaften der genannten Polymerisat/Weichmachergemische noch weiter verbessern. Dadurch kommt es aber zu bisher nicht lösbaren Problemen, wie Verschlechterung der Verarbeitbarkeit und der Kältebeständigkeit. Auch durch Anheben des Vinylalkoholanteils im Polymeren lassen sich einige Eigenschaften des Polymerisat-Weichmachergemisches verbessern. Dadurch leidet aber die Weichmacherverträglichkeit.

Es sind noch zahlreiche andere Weichmacher für Polyvinylbutyral bekannt. Zu erwähnen ist z. B. Adipinsäuredihexylester. Dieser Weichmacher ist allerdings nur mit Polyvinylbutyral mit bis zu maximal 20 Gew.-% Vinylalkoholeinheiten ausreichend verträglich. Solche Polymerisat/ Weichmachergemische haben nur bei relativ niedrigem Weichmachergehalt eine gute Festigkeit. Da der Weichmacher aber die Komponente ist, die im Vergleich zum Polymeren mit geringerem Aufwand zugänglich ist, ist es wünschenswert, Polymerisat /Weichmachergemische mit möglichst hohem Weichmachergehalt zu verarbeiten, was bei der erhöhten Fließfähigkeit solcher Gemische zudem besonders einfach ist. Ein sehr gutes Weichmachersystem ist bekanntlich auch die Kombination aus Phosphorsäureester und Phthalsäureester. Dieses System verleiht der Polyvinylbutyralfolie noch bei Weichmacherkonzentrationen bis zu 35 Gew.-% sehr gute mechanische Eigenschaften bei guter Kältebeständigkeit. Senkt man den Weichmachergehalt auf ca. 30 Gew.-%, so erhält man Folien mit sehr guter Festigkeit, deren Kältebeständigkeit aber merklich verschlechtert ist.

Nach dem Stand der Technik ist es somit nicht möglich, Folien mit außergewöhnlichen mechanischen Eigenschaften, wie hoher Reißfestigkeit und hoher Festigkeit bei 100 % Dehnung zu erhalten, ohne daß sich die Verarbeitbarkeit des Polymerisat/Weichmachergemisches und seine Tieftemperaturbeständigkeit verschlechtern, wobei häufig auch noch die Gefahr einer Weichmacherunverträglichkeit besteht.

Es wurde nun überraschenderweise gefunden, daß man Formkörper und insbesondere Folien von hoher Festigkeit, guter Verarbeitbarkeit und guten Tieftemperatureigenschaften aus thermoplastischen Formmassen auf der Basis von weichmacherhaltigem Polyvinylbutyral dadurch erhalten kann, daß man sie aus einem Komponentengemisch herstellt, welches aus

A) 65 - 80 Gew.-%, vorzugsweise 69 - 74 Gew.-% bezogen auf das Komponentengemisch, eines vorzugsweise 21 - 28 Gew.-%, insbesondere 22 bis 26 Gew.-%, Vinylalkoholeinheiten enthaltenden Polyvinylbutyrals und

B) 35 - 20 Gew.-%, vorzugsweise 31 - 26 Gew.-%, bezogen auf das Komponentengemisch, eines Weichmachergemisches aus

a) 50 - 99 Gew.-%, vorzugsweise 70 - 95 Gew.-%, bezogen auf das Weichmachergemisch, eines Glykolesters der Formel I,

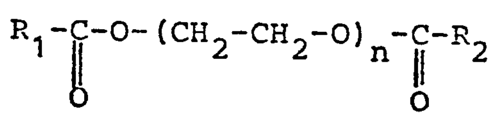

(I)

worin

$R_1$ und $R_2$, die gleich oder verschieden sein können, aliphatische Reste, die linear oder verzweigt sein können, mit jeweils 4 - 10 Kohlenstoffatomen, die gegebenenfalls zusätzlich substituiert sind und gegebenenfalls Doppelbindungen enthalten, und n eine ganze Zahl von 2 - 4 bedeuten, und

b) 50 - 1 Gew.-%, vorzugsweise 30 - 5 Gew.-%, bezogen auf das Weichmachergemisch, eines Phosphorsäureesters der Formel II,

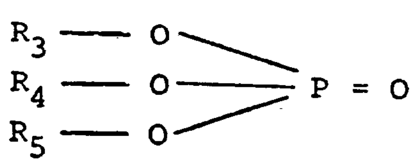

(II)

worin

$R_3$, $R_4$ und $R_5$, die gleich oder verschieden sein können, aliphatische Reste mit jeweils bis zu 18 C-Atomen, vorzugsweise 2 - 10 C-Atomen, die gegebenenfalls Doppelbindungen und/oder gegebenenfalls Heteroatome, vorzugsweise Sauerstoffatome, und/oder gegebenenfalls Halogenatome enthalten und auch substituiert sein können,

und $R_4$ und/oder $R_5$ auch cycloaliphatische Reste mit jeweils bis zu 18 C-Atomen bedeuten können, besteht.

Überraschenderweise genügen bereits relativ geringe Mengen an Phosphorsäureester der Formel II, um die Verträglichkeit des Glykolesters der Formel I mit dem Polyvinylbutyral (A) erheblich zu steigern. Das ist von beachtlichem Vorteil, denn der Phosphorsäureester der Formel II allein ist zwar sehr gut verträglich mit Polyvinylbutyral (A), er ergibt aber keine hochfesten Folien, d. h. Folien mit sehr hoher Zugfestigkeit.

Dagegen wird es durch Verwendung der erfindungsgemäßen Weichmacherkombination möglich, die sehr hohen zwischenmolekularen Kräfte des Polyvinylbutyrals (A) weitgehend zu erhalten und auszunutzen, so daß trotz relativ hoher Konzentrationen an Weichmachergemisch Folien mit außergewöhnlich guten mechanischen Eigenschaften und guter Verarbeitbarkeit erhalten werden können. Mit diesen Folien als Zwischenschicht können bei üblicher normaler Foliendicke Glasverbunde mit bisher nicht erreichter mittlerer Bruchhöhehergestellt werden. Wird dagegen ein Verbund mit bisher üblicher mittlerer Bruchhöhe angestrebt, so ist es andererseits möglich, bei Verwendung von erfindungsgemäß hergestellten Polyvinylbutyralfolien mit deutlich herabgesetzter Folien- und/oder Glasdicke auszukommen.

Gegenstand der Erfindung sind daher thermoplastische Formmassen auf der Basis von Weichmacherhaltigem Polyvinylbutyral, welche aus dem vorstehend beschriebenen erfindungsgemäßen Komponentengemisch hergestellt wurden.

Weitere Gegenstände der Erfindung sind ein Verfahren zur Herstellung der beanspruchten thermoplastischen Formmassen aus weichmacherhaltigem Polyvinylbutyral durch inniges Vermischen der vorstehend beschriebenen Einzelkomponenten zu dem erfindungsgemäßen Komponentengemisch, ferner die Verwendung der erfindungsgemäßen thermoplastischen Formmassen zur Herstellung von thermoplastischen Formkörpern, insbesondere von Folien, sowie die Verwendung dieser Folien zur Herstellung von Glasverbunden.

Als Weichmacherkomponente der Formel I werden bevorzugt die bekannten Di-, Tri- und Tetraethylenglykolester von aliphatischen Monocarbonsäuren mit 5 - 10 Kohlenstoffatomen verwendet. Besonders bevorzugt sind die Ester des Triethylenglykols mit 2-Ethylbuttersäure, n-Heptansäure, n-Octansäure, 2-Ethylhexansäure oder einem Gemisch aliphatischer Säuren mit 6 - 9 Kohlenstoffatomen. Bevorzugt sind auch die entsprechenden Ester des Tetraethylenglykols.

Der Anteil an Verbindungen der Formel I im Weichmachergemisch beträgt mindestens 50 Gew.-%, vorzugsweise mindestens 70 Gew.-%.

Die obere Grenze der Konzentration an Verbindungen der Formel I wird durch die Verträglichkeitsgrenze mit dem Polyvinylbutyral festgelegt. Sie liegt demzufolge bei niederem Gehalt an Vinylalkoholeinheiten im Polymerisat (A) und bei niederen Weichmacherkonzentrationen höher als beispielsweise bei hohem Gehalt an Vinylalkoholeinheiten. Diese Verträglichkeitsgrenze, die durch Variation der Phosphorsäureesterkomponente der Formel II im Weichmacher beliebig einstellbar ist, läßt sich leicht durch bekannte Methoden ermitteln.

Als Phosphorsäureester der Formel II kommen bevorzugt Ester aliphatischer geradkettiger oder verzweigter Alkohole in Frage, wie z. B. n-Butanol, n-Hexanol, 2-Ethylhexanol, Isodecylalkohol, Heptenol, Ethylglykol, oder Chlorethylalkohol, ferner Cyclohexanol. Besonders bevorzugte Phosphorsäureester sind Tris-(2-ethylhexyl)-, Tributoxyethyl- und Triisodecylphosphat.

Schon mit 1 % Anteil an Phosphorsäureester der Formel II im Weichmachergemisch verbessert sich die Verträglichkeit der Weichmacherkomponente der Formel I mit Polyvinylbutyral deutlich. Vorzugsweise werden 5 - 30 Gew.-% Phosphorsäureester im Weichmachergemisch eingesetzt. Die Gesamtweichmacherkonzentration im Polymerisat/Weichmachergemisch liegt im üblichen Bereich, d. h. vorzugsweise zwischen 20 und 35 Gew.-% (bezogen auf die gesamte Polymerisat/Weichmacher-Mischung). Besonders bevorzugt sind 26 - 31 Gew.-% Weichmachergemisch. Als vorteilhaft hat sich erwiesen, mit der Weichmacherkonzentration möglichst nahe an die Verträglichkeitsgrenze zu gehen, aber nur soweit, daß keine Gefahr der Unverträglichkeit bestehen kann.

Als Polymerisate werden grundsätzlich Polyvinylbutyrale eingesetzt, wie sie zur Herstellung von Verbundfolien z. B. in der DE-PS-2 732 717 und der DE-PS-2 453 780 sowie auch in zahlreichen anderen Literaturstellen beschrieben sind. Als präzisierendes Merkmal gilt lediglich, daß der Anteil an Vinylalkoholeinheiten im Polymerisat vorzugsweise mindestens 21 Gew.-%, insbesondere mindestens 22 Gew.-%, betragen soll. Die obere Grenze dieses Anteils liegt vorzugsweise bei 28 Gew.-%, insbesondere bei 26 Gew.-%.

Es können in manchen Fällen auch Polyvinylbutyrale eingesetzt werden, die einen Anteil von unter 21 Gew.-% bis zu 19 Gew.-% an Vinylalkoholeinheiten aufweisen. Dabei ist aber zu beachten, daß man dann bevorzugt solche Glykolester der Formel I verwendet, die an sich mit Polyvinylbutyral weniger gut verträglich sind, was z. B. bei Verbindungen der Formel I, worin $R_1$ und $R_2$ aliphatische Reste mit jeweils. 8 - 10 C-Atomen bedeuten, der Fall ist. In solchen Fällen sollte das Weichmachergemisch vorzugsweise 10 - 30 Gew.-% Phosphorsäureester der Formel II enthalten.

Das Polyvinylbutyral kann auch noch Vinylacetateinheiten in Mengen bis zu 5 Gew.-%, vorzugsweise bis zu 3 Gew.-%, bezogen auf das Polymerisat, enthalten.

Auch für das Molekulargewicht bzw. die Viskosität des Polymerisats gelten die üblichen Grenzen, wie sie z.

B. aus der DE-PS-2 453 780 bekannt sind. Bei hohem Gehalt an Vinylalkoholeinheiten im Polyvinylbutyral kann es vorteilhaft sein, mit relativ niedrigviskosen Polymerisaten zu arbeiten. Enthält das Polymerisat weniger Vinylalkoholeinheiten, kann auch seine Viskosität höher liegen. Im allgemeinen werden bevorzugt solche Polyvinylbutyrale zur Folienherstellung eingesetzt, die in 5 %-iger Lösung in Ethanol eine Viskosität zwischen 30 und 200 mPas aufweisen (gemessen nach DIN 53015 bei 23°C). Der Schmelzindex $i_2$, gemessen unter 2,16 kg Last bei 190°C nach DIN 53735 an polymerisat/Weichmachergemischen, liegt bevorzugt zwischen 0,5 und 10 g/10', insbesondere zwischen 1 und 5 g/10'. Als Maß für die Fließfähigkeit bei 150°C kann der Schmelzindex $i_{10}$ unter 10 kg Last ermittelt werden. Dieser Schmelzindex liegt bevorzugt zwischen 0,1 und 15 g/10', insbesondere zwischen 0,2 und 8 g/10'.

Polymerisat und Weichmacher können auf beliebige bekannte Weise vermischt und verarbeitet werden. So ist es z. B. möglich, das Polymerisat in Pulverform mit dem flüssigen Weichmacher in einem geeigneten Mischer intensiv zu mischen und dann aufzuschmelzen und zu verarbeiten. Eine andere Möglichkeit ist das Zusammengeben von Polymerisat und Weichmacher direkt auf der Verarbeitungsmaschine. Das Polymerisat /Weichmachergemisch kann auf Walzen, Kalandern oder Pressen zu Formkörpern bzw. Folien verarbeitet werden. Eine bevorzugte Verarbeitungsmethode ist die Extrusion durch eine Breitschlitzdüse.

Das erfindungsgemäß weichgemachte Polyvinylbutyral bzw. die daraus hergestellten Folien können außerdem die üblichen Zusätze enthalten, insbesondere Stabilisatoren, wie z. B. Phenole, Phosphorigsäureester, Triazinderivate und andere, vorzugsweise in Konzentrationen zwischen 0,1 und 1 Gew.-%, bezogen auf die gesamte thermoplastische Formmasse.

Ferner ist es zweckmäßig, dem weichgemachten Polymerisat, insbesondere für dessen Verwendung als Verbundglasfolie, außerdem solche Verbindungen zuzusetzen, welche die Haftung an Glas herabsetzen, wie z. B. basische Metallhydroxide und -salze insbesondere Kaliumhydroxid oder alkalische Kaliumsalze wie Kaliumformiat und Kaliumacetat, ferner Verbindungen mit Betainstruktur. Diese Zusätze werden vorzugsweise in Konzentrationen zwischen 0,01 und 0,2 Gew.-%, bezogen auf die gesamte thermoplastische Formmasse, eingesetzt.

Weitere Zusätze sind Antiblockmittel, optische Aufheller und Farbstoffe, die je nach Bedarf in üblichen Konzentrationen eingesetzt werden können.

Die Herstellung von Glasverbunden kann ebenfalls nach üblichen Methoden erfolgen. Dazu wird die erfindungsgemäß weichgemachte Polyvinylbutyralfolie beispielsweise zwischen zwei 1 - 3 mm starke Glasscheiben gelegt und bei ca. 60 bis 100°C zu einem Vorverbund verpreßt. Dieser kann dann in einem Autoklaven bei 120 - 160°C zum Endverbund verpreßt werden.

In den folgenden Beispielen wurden zur Charakterisierung der erfindungsgemäßen Polyvinylbutyralfolien bzw. der Glasverbunde folgende Testmethoden herangezogen.

1. Bestimmung der Festigkeit (DIN 53455).

Die normalerweise 0,6 bis 0,8 mm starke Folie wird mindestens 3 Tage bei 23°C und 50 % rel. Luftfeuchte klimatisiert. Reißfestigkeit, Reißdehnung und Festigkeit bei 100 % Dehnung werden unter folgenden Bedingungen gemessen: Einspannlänge 50 mm, Breite der Meß-Streifen 15 mm, Zuggeschwindigkeit 20 cm/min.

2. Weichmacherverträglichkeit.

Folienteststreifen aus Polymerisat/Weichmacher-Gemisch mit den Abmessungen 100 x 15 x 0,9 mm werden in der Mitte, quer zur Längsrichtung, gefaltet und in solcher Weise zwischen zwei Glasplatten gelegt, daß eine Schlaufe des Streifens ca. 5 mm zwischen den Glasplatten herausragt. Die Proben werden sodann 7 Tage bei 23°C und 100 % Luftfeuchte gelagert. Das Ausschwitzen des Weichmachers wird auf der Innenseite der Schlaufe visuell mittels einer Lupe ermittelt.

3. Flexibilität in der Kälte.

An den nach obigem Punkt 1 klimatisierten Folien wird nach DIN 43445 der Schubmodul in Abhängigkeit von der Temperatur gemessen. Als Maß für die Kältebeständigkeit der Folien wird die Temperatur ermittelt, bei der der Schubmodul G den Wert von $10^3$ N/mm$^2$ erreicht (= Kältewert in °C).

4. Mittlere Bruchhöhe von Glasverbunden (DIN 52306).

Auf bekannte Weise werden 30 x 30 cm große Glasverbunde aus zwei 3 mm starken Floatglasscheiben und einer 0,76 mm bzw. 0,6 mm starken weichgemachten Polyvinylbutyralfolie hergestellt. Von den Verbunden wird mit einer 2,26 kg-Stahlkugel die mittlere Bruchhöhe ermittelt, das ist die Kugelfallhöhe, bei der 50 % der geprüften Scheiben durchschlagen werden.

Die Erfindung wird durch die nachfolgenden Beispiele näher erläutert.

**Beispiel 1**

Drei Proben eines Polyvinylbutyralpolymerisats mit einem Anteil an Vinylalkoholeinheiten von 22,3 Gew.-% wurden jeweils 10 Minuten bei 150°C mit den in der Tabelle 1 unter a) bis c) angegebenen Weichmachermengen (Gew.-%, bezogen auf die gesamte Polymerisat/Weichmacher-Mischung) verknetet. Das Polymerisat hatte eine Viskosität von 72 mPas, gemessen an einer 5 %-igen Lösung in Ethanol bei 23°C nach DIN 53 015. Vor der Messung wurde das Polymerisat bei 70°C gelöst. Die Messung erfolgte sofort nach dem Abkühlen der

Lösung. Aus den drei Mischungen a) - c) wurden jeweils 0,8 mm starke Folien hergestellt. Die Ausprüfung dieser Folien brachte folgende in der Tabelle 1 zusammengefaßt wiedergegebene Ergebnisse:

**Tabelle 1**

| Weichmacher (Gew.-%, bezogen auf die Folie) | Weichmacher-verträglichkeit | Reißfestigkeit ($N/mm_2$) | Reißdehnung (%) | Schmelzindex $i_{10}$ 150°C (g/10') | Kältewert (°C) |
|---|---|---|---|---|---|
| a) 29 Triethylenglykoldi-n-heptanoat (3G7) (= Vergleich) | nein | 27,5 | 325 | 5,8 | -50 |
| b) 29 3G7/Tri-2-ethylhexylphosphat (TOF), Gew.-% Verh. 9 : 1 | ja | 27,0 | 330 | 5,7 | -52 |
| c) 31 3G7/TOF, Gew.-% Verh. 9 : 1 | ja | 25,0 | 355 | 8,0 | -55 |

Die Tabelle 1 zeigt, daß die erfindungsgemäß hergestellte Folie b) bei guter Weichmacherverträglichkeit dieselben günstigen Eigenschaften besitzt wie die Vergleichsfolie a), welche jedoch mit dem Weichmacher nicht ausreichend verträglich ist. Dagegen zeigt die Folie c) mit ihrer höhere erfindungsgemäßen Weichmachermenge eine einwandfreie Verträglichkeit. Neben sehr guter Kältebeständigkeit besitzen die Folien b) und c) außerdem Festigkeiten, die den Erfordernissen des Standes der Technik voll entsprechen.

**Beispiel 2**

**A (Vergleichsproben)**

0,8 mm starke Folien wurden wie in Beispiel 1 aus einem weichgemachten Polyvinylbutyral hergestellt welches 23,2 Gew.-% Vinylalkoholeinheiten enthielt. Es wurden jeweils 29 Gew.-% Weichmacher (bezogen auf die gesamte Polymerisat/Weichmacher-Mischung) eingesetzt, und zwar bei den Proben a) bis c) die Di-Ester des Triethylenglykols folgender Säuren:

a) n-Heptansäure (3G7)
b) 2-Ethylbuttersäure (3GH)
c) Gemisch von ($C_6$ - $C_9$)-Carbonsäuren (3G6-9),
und bei der Probe d) der n-Heptansäuretetraethylenglykoldiester (4G7).

Keine der Folien a) bis d) bestand den Weichmacher-Verträglichkeitstest.

**B (Erfindungsgemäße Proben)**

Wurden von den 29 Gew.-% der in den Proben A eingesetzten Weichmacher a) - d) erfindungsgemäß jeweils 15 Gew.-% durch Trioctylphosphat ersetzt, so wurde in allen Fällen eine einwandfreie Weichmacher-Verträglichkeit erreicht, ohne daß dadurch die Festigkeit der Folien oder deren Fließfähigkeit beeinträchtigt wurden.

**Beispiel 3**

30 Gew.-% 3GH, bezogen auf die gesamte Polymerisat/Weichmacher-Mischung, sind mit einem Polyvinylbutyral, das 24,2 Gew.-% Vinylalkoholeinheiten enthält, nicht mehr verträglich. Eine aus dieser Mischung hergestellte 0,76 mm starke Folie hat jedoch die hohe Reißfestigkeit von 30,5 $N/mm^2$ bei einem Schmelzindex $i_{10}$ 150°C von 1,8 g/10'. In einer Versuchsreihe wurden nun statt 30 Gew.-% 3GH erfindungsgemäß 30 Gew.-% einer Weichmacherkombination eingesetzt, die jeweils 8 Gew.- Teile 3GH und 2 Gew.- Teile verschiedener

Phosphorsäureester enthielt, wobei die in der Tabelle 2 unter e) bis g) angegebenen Phosphorsäureester der Formel II eingesetzt wurden. Wie das in Tabelle 2 zusammengefaßte Ergebnis zeigt, besitzen die erfindungsgemäß weichgemachten Folienproben e) bis g) sowohl eine gute Weichmacherverträglichkeit, als auch eine hervorragende Reißfestigkeit neben einem sehr günstigen Schmelzindex $i_{10}$ 150°C.

**Tabelle 2**

| Weichmacherkomponenten der Formel II | Weichmacher-verträglichkeit | Reißfestigkeit ($N/mm^2$) | Schmelzindex $i_{10}$ 150°C (g/10') |
|---|---|---|---|
| e) Trioctylphosphat (TOF) | ja | 30,5 | 1,9 |
| f) Trichlorethylphosphat | ja | 31,5 | 1,4 |
| g) Tributoxyethylphosphat | ja | 31,0 | 1,1 |

**Beispiel 4**

Ein Polyvinylbutyral mit einem Anteil an Vinylalkoholeinheiten von 22,6 Gew.-% und einer Viskosität von 60 mPas (gemessen wie in Beispiel 1 angegeben) wurde mit 27,5 Gew.-% (bezogen auf die gesamte Polymerisat/Weichmacher-Mischung) einer Weichmacherkombination aus 90 Gew.-% 3GH und 10 Gew.-% TOF vermischt und zu einer 0,6 mm starken Folie extrudiert. Als Antihaftmittel enthielt die Folie 0,03 Gew.-%, bezogen auf die Folie, Kaliumformiat. Die Folie hatte folgende Eigenschaften:

Reißfestigkeit 31,0 $N/mm^2$, Reißdehnung 295 %, Festigkeit bei 100 % Dehnung 5,4 $N/mm^2$, Schmelzindex $i_{10}$ 150°C = 2,7 g/10', kein Ausschwitzen des Weichmachers. Ein mit dieser Folie hergestellter Verbund aus zwei 3 mm-Floatglasplatten hatte eine mittlere Bruchhöhe von 5,50 m.

**Beispiel 5**

Eine erfindungsgemäß durch Extrusion hergestellte weichgemachte Polyvinylbutyralfolie (= Versuch C) wurde mit einem Handelsprodukt (= Vergleich 1) verglichen. Als weiteres Vergleichsprodukt wurde eine Folie herangezogen, die als Weichmachersystem eine Mischung aus Phosphorsäureester und Phthalsäureester enthielt (= Vergleich 2). Die Versuchsergebnisse sind in der Tabelle 3 zusammengefaßt wiedergegeben. Sie zeigen die vorteilhaften Festigkeitseigenschaften der erfindungsgemäßen Folie aus Versuch C sowie den besseren Kältewert der letzteren gegenüber der Folie aus dem Vergleich 2.

Der Versuch D beinhaltet eine erfindungsgemäß durch Extrusion hergestellte weichgemachte Polyvinylbutyralfolie, deren Polyvinylbutyralkomponente aus 20,5 Gew.-% Vinylalkoholeinheiten und deren Weichmachersystem aus 2-Ethylhexansäuretriethylenglykoldiester (= 3G8) und Trioctylphosphat (= TOF) bestehen.

**Tabelle 3**

| Folie aus | Vinylalkoholeinheiten in der Polyvinylbutyralkomponente (Gew.-%) | Weichmacherkomponente (Gew.-%, bezogen auf die Folie) | Weichmacherverträglichkeit | Schmelzindex $i_2$ 190°C (g/10') | Reißfestigkeit ($N/mm^2$) | Reiß dehnung (%) | Festig- bei 100 % Dehnung ($N/mm^2$) | Kältewert (°C) |
|---|---|---|---|---|---|---|---|---|
| Versuch C | 24,2 | 29 3G7/TOF, Gew.-% Verh. 8 : 2 | ja | 2,9 | 32,0 | 320 | 6,5 | -49 |
| Vergleich 1 | 21,2 | 29,5 3GH | ja | 1,4 | 26,0 | 295 | 4,3 | -49 |
| Vergleich 2 | 20,7 | 31 Dihexylphthalat/TOF, Gew.-% Verh. 8 : 2 | ja | 4,4 | 28,5 | 310 | 3,8 | -39 |
| Versuch D | 20,5 | 29 3G8/TOF, Gew.-% Verh. 8 : 2 | ja | 5,4 | 29,0 | 310 | 4,5 | -51 |

**Beispiel 6**

Ein Polyvinylbutyral mit einem Anteil an Vinylalkoholeinheiten von 26,0 Gew.-% wurde in einem Brabenderkneter mit jeweils 28 Gew.-% (bezogen auf die gesamte Polymerisat/ Weichmacher-Mischung) der

in der Tabelle 4 aufgeführten Weichmachermischungen a) bis c) 10 Minuten bei 150°C verknetet. In der Tabelle 4 sind die Prüfergebnisse zusammengefaßt, welche die hohe Festigkeit, die gute Fließfähigkeit und die gute Weichmacherverträglichkeit der erfindungsgemäßen Polyvinylbutyral/Weichmachermischungen a) bis c) zeigen.

Tabelle 4

| Weichmachermischungen | Weichmacher-verträglich-keit | Schmelz-index $i_2$ 190°C (g/10′) | Reiß-festigkeit der 0,8 mm-Folie ($N/mm^2$) |
|---|---|---|---|
| a) 3GH/TOF, Gew.-% Verh. 6 : 4 | ja | 2,3 | 32,0 |
| b) 3GH/Trichlorethylphosphat | ja | 2,7 | 34,0 |
| c) 3GH/Tributoxyethylphosphat Gew.-% Verh. 6 : 4 | ja | 2,4 | 37,5 |

**Beispiel 7**

Aus einem Polyvinylbutyral, mit einer Viskosität von 81 mPas (gemessen wie in Beispiel 1 angegeben) und 23,6 Gew.-% Vinylalkoholeinheiten, und 29 Gew.-% (bezogen auf die gesamte Polymerisat/Weichmacher-Mischung) eines Weichmachergemisches aus 3G7/TOF, Gew.-% Verh. 8 : 2, wurde eine 0,76 mm starke Folie durch Extrusion hergestellt. Die Einstellung der Glashaftung der Folie erfolgte durch Zusätze von 0,04 Gew.-% einer Verbindung mit Betainstruktur der Formel

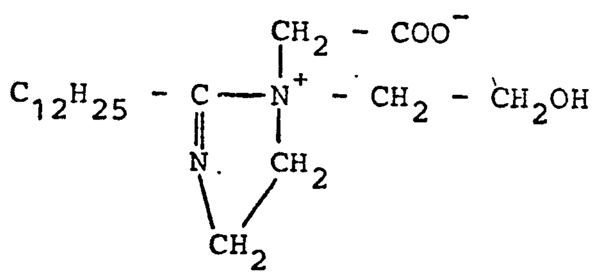

und 0,04 Gew.-% (jeweils bezogen auf die gesamte Polymerisat/Weichmacher-Mischung) Kaliumformiat zur Polymerisat/Weichmacher-Mischung. Die resultierende Folie hatte folgende Eigenschaften: Schmelzindex $i_2$ 190°C = 3,4 g/10′, Reißfestigkeit 31,5 $N/mm^2$, Reißdehnung 315 %, Festigkeit bei 100 % Dehnung 6,3 $N/mm^2$, Kältewert -49°C.

Mit dieser Folie hergestellte Glasverbunde aus zwei 3 mm starken Floatglasplatten hatten eine mittlere Bruchhöhe von 7,80 m. Parallel dazu wurden mit demselben Floatglas unter denselben Bedingungen Verbunde mit einer handelsüblichen 0,76 mm starken Folie hergestellt. Diese Verbunde hatten eine mittlere Bruchhöhe von nur 6,40 m.

**Patentansprüche**

1. Thermoplastische Formmassen auf der Basis von weichmacherhaltigem Polyvinylbutyral, dadurch gekennzeichnet, daß sie aus einem Komponentengemisch aus

A) 65 - 80 Gew.-%, bezogen auf das Komponentengemisch, eines Vinylalkoholeinheiten enthaltenden Polyvinylbutyrals und

B) 35 - 20 Gew.-%, bezogen auf das Komponentengemisch, eines Weichmachergemisches aus

a) 50 - 99 Gew.-%, bezogen auf das Weichmachergemisch, eines Glykolesters der Formel I,

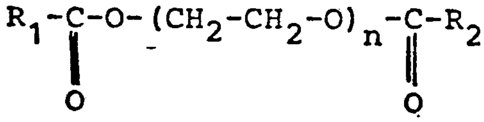

(I)

worin

$R_1$ und $R_2$, die gleich oder verschieden sein können, aliphatische Reste mit jeweils 4 - 10 Kohlenstoffatomen und n eine ganze Zahl von 2 - 4 bedeuten, und

b) 50 - 1 Gew.-%, bezogen auf das Weichmachergemisch, eines Phosphorsäureesters der Formel II,

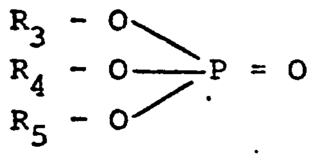

(II)

worin

$R_3$, $R_4$ und $R_5$, die gleich oder verschieden sein können, aliphatische Reste mit jeweils bis zu 18 Kohlenstoffatomen, die gegebenenfalls Doppelbindungen und/oder gegebenenfalls Heteroatome und/oder gegebenenfalls Halogenatome enthalten und auch substituiert sein können, und $R_4$ und/oder $R_5$ auch cycloaliphatische Reste mit jeweils bis zu 18 Kohlenstoffatomen bedeuten können, bestehen.

2. Thermoplastische Formmassen nach Anspruch 1, dadurch gekennzeichnet, daß die Komponente A aus einem 19 - 28 Gew.-% Vinylalkoholeinheiten enthaltenden Polyvinylbutyral besteht.

3. Thermoplastische Formmassen nach Anspruch 1, dadurch gekennzeichnet, daß sie aus 74 - 69 Gew.-% eines 22 - 26 Gew.-% Vinylalkoholeinheiten enthaltenden Polyvinylbutyrals und 26 - 31 Gew.-% Komponentengemisch B, bestehend aus 70 - 95 Gew.-% Komponente Ba) und 30 - 5 Gew.-% Komponente Bb), bezogen auf das Komponentengemisch B, bestehen.

4. Polyvinylbutyralformkörper, hergestellt aus einer thermoplastischen Formmasse nach einem der Ansprüche 1 bis 3.

5. Polyvinylbutyralfolien hoher Festigkeit, hergestellt aus einer thermoplastischen Formmasse nach einem der Ansprüche 1 bis 3.

6. Verwendung von Polyvinylbutyralfolien nach Anspruch 5 zur Herstellung von Glasverbunden.

7. Glasverbunde, enthaltend Polyvinylbutyralfolie nach Anspruch 5 als Verbundschicht.

**Claims**

1. A thermoplastic molding composition based on polyvinylbutyral containing plasticizer, comprising a component mixture of

A) 65 - 80 % by weight, based on the component mixture, of a polyvinylbutyral containing vinyl alcohol units and

B) 35 - 20 % by weight, based on the component mixture, of a plasticizer mixture of

a) 50 - 99 % by weight, based on the plasticizer mixture, of a glycol ester of the formula I

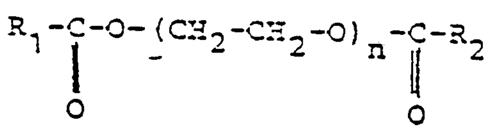

(I)

in which

$R_1$ and $R_2$, which can be identical or different, denote aliphatic radicals with in each case 4 - 10 carbon atoms and n denotes an integer from 2 to 4, and

b) 50 - 1 % by weight, based on the plasticizer mixture, of a phosphoric acid ester of the formula II

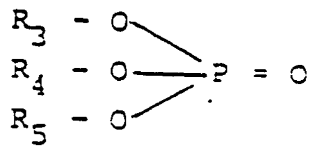 (II)

in which

$R_3$, $R_4$ and $R_5$, which can be identical or different, denote aliphatic radicals which have in each case up to 18 carbon atoms, optionally contain double bonds and/or optionally contain hetero-atoms and/or optionally contain halogen atoms and can also be substituted and $R_4$ and/or $R_5$ can also denote cycloaliphatic radicals with in each case up to 18 carbon atoms.

2. A thermoplastic molding composition as claimed in claim 1, wherein component A comprises a polyvinylbutyral containing 19 - 28 % by weight of vinyl alcohol units.

3. A thermoplastic molding composition as claimed in claim 1, which comprises 74 - 69 % by weight of a polyvinylbutyral containing 22 - 26 % by weight of vinyl alcohol units and 26 - 31 % by weight of component mixture B, consisting of 70 - 95 % by weight of component Ba) and 30 - 5 % by weight of component Bb), based on the component mixture B.

4. A shaped polyvinylbutyral article produced from a thermoplastic molding composition as claimed in any of claims 1 to 3.

5. A polyvinylbutyral film of high strength, produced from a thermoplastic molding composition as claimed in any of claims 1 to 3.

6. The use of a polyvinylbutyral film as claimed in claim 5 for the production of glass laminates.

7. A glass laminate containing a polyvinylbutyral film as claimed in claim 5 as the bonding layer.

**Revendications**

1. Mélanges à mouler thermoplastiques à base de polyvinylbutyral plastifié, caractérisés en ce qu'ils sont constitués d'un mélange de composants, lui-même constitué

A) de 65 à 80 % en poids, par rapport au mélange de composants, d'un polyvinylbutyral contenant des motifs alcool vinylique, et

B) de 35 à 20 % en poids, par rapport au mélange de composants, d'un mélange de plastifiants constitué

a) de 50 à 99 % en poids, par rapport au mélange de plastifiants, d'un ester glycolique de formule I,

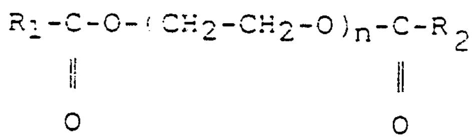 (I)

dans laquelle

$R_1$ et $R_2$, qui peuvent être identiques ou différents, sont des radicaux aliphatiques ayant chacun 4 à 10 atomes de carbone, et n est un nombre entier de 2 à 4, et

b) de 50 à 1 % en poids, par rapport au mélange de plastifiants, d'un ester de l'acide phosphorique de formule II

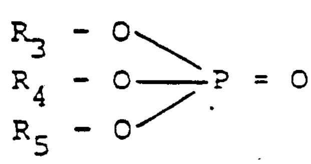 (II)

dans laquelle

$R_3$, $R_4$ et $R_5$, qui peuvent être identiques ou différents, sont des radicaux aliphatiques ayant chacun jusqu'à 18 atomes de carbone, qui contiennent éventuellement des doubles liaisons et/ou éventuellement des hétéroatomes et/ou éventuellement des atomes d'halogène et peuvent aussi être substitués, et $R_4$ et/ou $R_5$ peuvent aussi représenter des radicaux cycloaliphatiques ayant chacun jusqu'à 18 atomes de carbone.

2. Mélanges à moluer thermoplastiques selon la revendication 1, caractérisés en ce que le composant A est constitué d'un polyvinylbutyral contenant de 19 à 28 % en poids de motifs alcool vinylique.

3. Mélanges à mouler thermoplastiques selon la revendication 1, caractérisés en ce qu'ils sont constitués de 74 à 69 % en poids d'un polyvinylbutyral contenant de 22 à 26 % en poids de motifs alcool vinylique et de 26 à 31 % en poids du mélange de composants B, lui-même constitué de 70 à 95 % en poids du composant Ba) et de 30 à 5 % en poids du composant Bb), par rapport au mélange de composants B.

4. Objets moulés en polyvinylbutyral, fabriqués à partir d'un mélange à mouler thermoplastique selon l'une des revendications 1 à 3.

5. Feuilles en polyvinylbutyral à résistance mécanique élevée, fabriquées à partir d'un mélange à mouler thermoplastique selon l'une des revendications 1 à 3.

6. Utilisation de feuilles en polyvinylbutyral selon la revendication 5 pour la fabrication de verres feuilletés.

7. Verres feuilletés contenant en tant que couche de liaison une feuille de polyvinylbutyral selon la revendication 5.